# EUROPEAN PATENT APPLICATION

(11) **EP 1 571 840 A1**
(43) Date of publication of application: **07.09.2005**
(21) Application number: 04300105.6
(22) Date of filing: 01.03.2004
(51) Int. Cl.: H04N 5/76

(54) **Method for optimized start and end time of a timer for recording**

(71) Applicant: Thomson Licensing S.A., 92100 Boulogne-Billancourt (FR)
(72) Inventor: Kwok, Kwong Heng, 730375 Singapore (SG)
(74) Representative: Rossmanith, Manfred

(57) **Abstract**

The method for recording of a transmitted data program onto a storage medium by means of a timer comprises the steps of a) beginning to record the data a specified time before the official begin of the program, b) checking during the recording the occurrence of a blank symbol within the program, c) skipping the recorded data when a blank symbol is detected and beginning the recording again.

## Description

### BACKGROUND OF THE INVENTION

The present invention relates to a method for recording data onto a storage medium by means of a timer, for example onto a recordable DVD or a videocassette. It relates in particular to a programmable recording of a television program by means of a timer.

Television programs, for example videos, transmitted via television broadcast often have the disadvantage that the official start and end times of the programs do not coincide with the real broadcast transmission. Some programs start and end delayed, other programs start and end earlier as expected, which makes it difficult to record a program exactly with a timer. A correct recording is no problem, if a VPS signal is transmitted with the program. However, many television stations do not use a VPS signal.

### SUMMARY OF THE INVENTION

It is therefore an object of the present invention, to provide a method for recording data onto a storage medium, which optimizes the start and end time of the recording, in particular, if no VPS signal is present.

This object is achieved in accordance with the invention by a method as specified in claim 1. Advantageous embodiments of the invention are specified in the subclaims.

The method for recording of a transmitted data program onto a storage medium by means of a timer according to the invention comprises the steps of
a) beginning to record the data a specified time before the official begin of the program,
b) checking during the recording the occurrence of a blank symbol within the program,
c) skipping the recorded data when a blank symbol is detected and beginning the recording again.

In a preferred embodiment, at the beginning of the recording, the data are first buffered in a memory, which can be the storage medium itself or for example a separate semiconductor memory, and when a blank symbol occurs during the specified time before the official begin of the program, this occurrence is determined as the official begin of the wanted data program, or the official start time. Then, the data stored before this event are then skipped, or respectively deleted, and the official recording onto the storage medium begins from this event on. When a further blank symbol occurs during this specified time, this occurrence is determined again as the official begin of the wanted data program, and the data stored before this event are then skipped also. This is repeated, until the end of the specified time.

The storage medium is for example a hard disk (HDD) or an optical disk onto which the data are recorded, beginning to record the data a specified time before the official begin of the program. When a blank symbol appears in a specified time interval, the already recorded data are deleted, and the recording starts again from this time event, which is considered then as the official begin of the program. With this method therefore, also television programs beginning before the official time can be captured with the timer programming. Also television programs beginning after the official time can be recorded correctly with this timer method, avoiding therefore a waste of storage capacity.

### BRIEF DESCRIPTION OF THE DRAWINGS

Preferred embodiments of the invention are explained in more detail with regard to schematic drawings, which show:

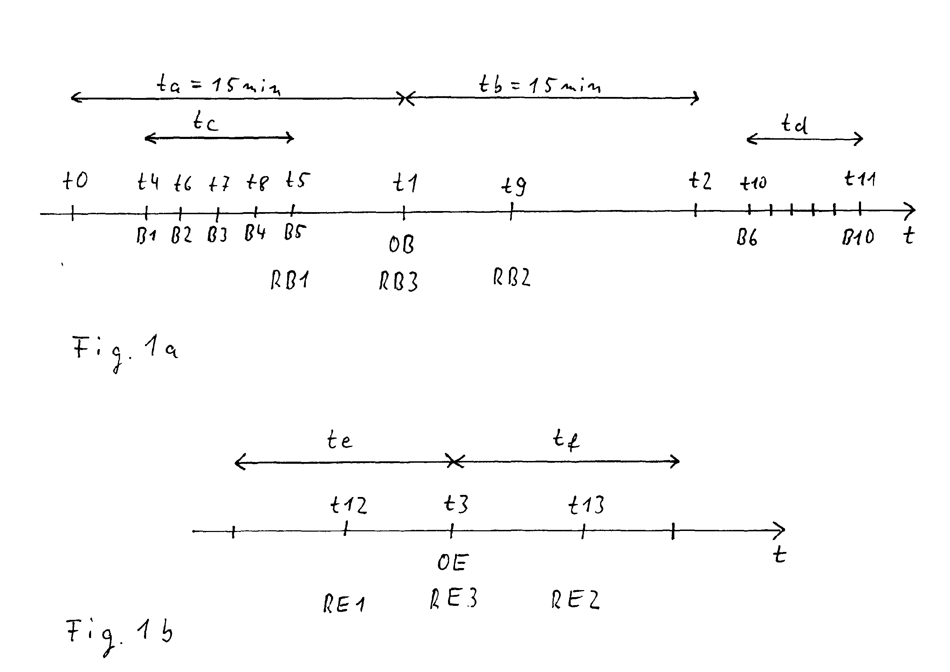

- Fig. 1a: a time scale for illustrating a method with an optimized start time of a timer recording, and
- Fig. 1b: a time scale for illustrating a timer recording with an optimized end time.

### DETAILED DESCRIPTION OF PREFERRED EMBODIMENTS

In Figures 1a and 1b, time scales are shown according to which a recording of a television program is performed by means of a timer recording, in accordance with the present invention. The official begin OB of the television program is at a time t1 and the official end OE is at a time t3. These times are published for example in advance of the television transmission in a program guide. Due to actual events, it may happen that the real begin of the television program is in advance or after the official begin OB of the program. This is the case for example, when any high priority political events have to be shown, or when a preceding sports event, for example a tennis match, ends earlier or delayed.

A user, who wants to record the television program with a video recorder, for example a DVD recorder, inputs then the time t1 for the official begin OB of the television program and the time t3 for the official end OE of the television program. According to the method, the recording then does not start at the time t1, but at a specified time ta, in this embodiment 15 minutes, before the official begin OB of the television program, at time t0. When the recording starts at time t0, the recorded data is written for example onto a recordable disk, i.e. a DVD-RW optical disk, a hard disk, or is buffered in a semiconductor memory.

Television programs from commercial television stations are usually interrupted frequently by commercial advertisements. For example, five minutes with a sequence of commercial advertisements are included periodically after 30 or 40 minutes of regular program transmission. Because of the abrupt change of the transmission, usually a transmission phase without any information occurs during the switching from the regular program to a commercial, and also when switching from a commercial to the next commercial. When such a switching occurs, no information is transmitted. This transmission can be regarded therefore as a transmission of one or several blank symbols, which can be for example one or several black pictures consisting of black fields in the case of an analog television transmission, or can be one or several blank frames in the case of a digital television transmission.

The recorder, which starts the timer recording in accordance with the figure 1a, comprises a detector for a detection of blank symbols, as described before. This detector can be for example a program contained in a microprocessor, which checks the incoming video signal whether there are black fields or blank frames occurring during the reception of the video signal. As shown in figure la, after time t0 blank symbols B1 - B5 are occurring within a time interval tc, i.e. 5 minutes, between times t4 and t5, the time interval tc being contained within the time interval ta.

At the time t4 of the occurrence of the first blank symbol B1, the recorder recognizes a program change, which may mean that there starts a commercial. But it may mean also that this is the official begin of the television program. The recorder then skips respectively deletes the already recorded data, and starts the recording again at the position of the storage medium, which corresponds to the position at the beginning of the recording at time t0.

This can be in the case of a DVD recorder recording onto a DVD-RW, that the recording begins again at the beginning of the DVD-RW. In case the recorder comprises a hard disk as the recording medium, the recorders then starts again at the position of the hard disk corresponding to the position of time t0, the start of the recording. In case the data are stored in a semiconductor memory, the memory with the data corresponding to the time interval t0 - t4 is cleared.

The recorder then recognizes the blank symbol B2 at time t6. After the occurrence of the blank symbol B2, the recorder then skips the recorded data before the time t6 and begins again with the recording at the position of the storage medium, which corresponds to the position at the beginning of the recording at time t0.

This happens also after the occurrence of the blank symbols B3, B4 and B5. Therefore, all data recorded before time t5 are overwritten. After the occurrence of the blank symbol B5, a longer data transmission without any blank symbol occurs. The time t5 is then recognized as the end of the sequence of commercials and the recording beginning at the time t5 is considered as the recording of the official program. The real begin RB1 of the television program at time t5 is in this case recognized before the official begin OB at time t1.

In a preferred embodiment, the recorder uses further a second time interval tb, in this embodiment 15 minutes, after the official begin OB at time t1, for checking the data transmission for blank symbols. In many cases, a new program starts at the end of a series or commercial advertisements. But in many cases, the commercials B1 - B5 are embedded within the television program transmitted before the wanted television program, between t4 and t5 as shown in figure la, and the end of the previous television program occurs at a time t9, which is for example after time t1.

When a program change occurs at time t9 for example, there are transmitted one or several blank symbols at the time t9 with the television broadcast, as described before. When at time t9 the recorder recognizes a blank symbol, the recorder then skips the recorded data before the time t9 and begins again with the recording, as described before with regard to the real begin RB1. Because no further blank symbols occur within the time interval tb, the time t9 is therefore the real begin RB2 of the wanted program for this example. The real begin RB2 is in this case after time t1. The recorder continues therefore the recording after time t9.

When within the time interval tb a sequence of advertisements is recognized, the recorder uses the same method, as described before with regard to the time interval tc. Because there is always a long time interval between a first block of commercials, as shown within the time interval tc, the next block of commercials would be after time t2, for example within a time interval td beginning at time tl0. Because the time interval td is after the time t2, no program data are skipped at time t10. When a block of commercials would occur in the time interval tb, no block of commercials would be in the time interval ta, because blocks of commercials are always separated by at least 30 minutes. Therefore, commercials can be clearly separated from the official program to be recorded.

Also, when there is a program change at time t1, for example when the wanted program starts at time t1 as originally intended, then this program change is recognized also as a real begin RB3 of the wanted program. A first block of commercials, for example occurring during time interval tc, is at least separated by 30 minutes from the next block of commercials, which occurs then after the time t2. The data between t1 and t2 therefore cannot be confused as a commercial, which would be skipped. Therefore, for each possible case RB1, RB2 and RB3, the recorder recognizes the correct beginning of the wanted program and skips only the data before the wanted program.

After time t2, the recording still continues. The occurrence of any commercials after time t2, for example in the time interval td, is recognized, but this does not lead to a deletion of data recorded before the time t10. Time t10 is recognized as the begin of a block of commercials, because at time t10 a series of blank symbols B6 - B10 occur in the short time interval td of about 5 minutes. The data between time t10 and t11 may be skipped therefore also by the recorder, by skipping the data transmitted between times t10 and t11.

In figure 1b, it is shown how the recorder ends the recording by means of the timer. In case the real begin RB1 of the program lies before time t1, within the time interval ta, then it is assumed that the real end RE1 of the recording lies before the official end, time t3, within a time interval te. Any blank symbol within the time interval te, for example at time t12, is then recognized as the real end of the wanted program, and the recording is stopped accordingly.

In case the real begin RB2 of the wanted program has been recognized within the time interval tb, at time t9, then the recorder considers the end of the official program to be most likely within a time interval tf. Any blank symbol occurring then within interval tf, for example at time t13, is then considered as the real end RE2 of the official program, and the recorder stops accordingly.

In case the real begin RB3 of the wanted program occurred at time t1, then the recorder considers a time shortly before or after time t3 as the most likely end of the recording. Then, any blank symbol occurring at time t3, or shortly before or after t3, is recognized and considered as the real end RE3 of the program, and the recording is stopped.

The present invention is not limited to the embodiments as described with regard to the figures, and various available modifications come possible for those skilled in the art without departing from the scope of the invention. For example, a various storage mediums may be used. The method as described before is useful especially for a recording of a television program transmitted via terrestrial broadcast, via cable or satellite, but may be used also for recording any data program from Internet by means of a computer, the computer using a timer method as described before.

## Claims

1. Method for recording of a transmitted data program onto a storage medium by means of a timer, comprising the steps of
A) beginning to record the data a first specified time (t0) before the official begin (OB) of the data program,
B) checking during the recording the occurrence of a blank symbol (B1-B5) within the data program,
C) skipping the already recorded data when a blank symbol (B1-B5) is detected during the recording until a second specified time (t2), and beginning the recording again.

2. Method according to claim 1, **characterized in that** the first specified time (t0) is a time between 20 minutes and zero before the official begin (OB) of the data program.

3. Method according to claim 1 or 2, **characterized in that** the second specified time (t2) is a time between zero and 20 minutes after the official begin (OB) of the data program.

4. Method according to claim 1, 2 or 3, **characterized in that** a blank symbol (B1-B10) corresponds to one or several blank pictures in case of an analog television program and one or several blank frames in case of a digital television program.

5. Method according to one of the preceding claims, **characterized in that** the recording is started at the latest, when the official start time (t1) is reached, or when the second specified time (t2) is reached.

6. Method according to one of the preceding claims, **characterized in that** in case the actual begin is determined to be after the official begin of the program, the recording is not stopped at the official end of the program, but the recording is continued until a blank symbol is recognized, or after a specified time, for example 20 minutes.
